# EUROPEAN PATENT APPLICATION

(11) **EP 4 755 607 A1**
(43) Date of publication of application: **10.06.2026**
(21) Application number: 24849094.8
(22) Date of filing: 26.07.2024
(51) Int. Cl.: B29C 45/74, B29C 45/62

(54) **MELTING APPARATUS FOR INJECTION MOLDING DEVICE AND INJECTION MOLDED ARTICLE USING SAME**

(30) Priority: 28.07.2023 JP 2023123357
(71) Applicant: Century Innovation Corporation, Tokyo 104-0033 (JP)
(72) Inventor: ASAGIRI, Atsuo, Shinkawa, Chuo-ku, Tokyo 1040033 (JP); NARITOMI, Masanori, Shinkawa, Chuo-ku, Tokyo 1040033 (JP); MIKUNI, Toshio, Shinkawa, Chuo-ku, Tokyo 1040033 (JP); SATO, Koji, Shinkawa, Chuo-ku, Tokyo 1040033 (JP)
(74) Representative: Franke, Dirk
(86) International application number: PCT/JP2024/026819
(87) International publication number: WO 2025/028442

(57) **Abstract**

The present invention has an object to provide a melter device for a plunger-type injection molding apparatus that has a vertical structure and includes no resin extrusion screw, the melter device melting resin material (resin pellets). This melter device for the injection molding apparatus includes: a melter portion that forms a rectangular box-shaped housing structure, and internally has a plurality of melt ports that completely penetrate upward and downward and have smaller horizontal sectional areas at the upper end than at the lower end; and heater-accommodating portions that are provided at least on one of large-width outer walls of the melter portion and a lower part therebelow so as to face each other, and include heating instruments.

## Description

### Technical Field

The present invention relates to a melter device for a plunger-type injection molding apparatus that has a vertical structure and includes no resin extrusion screw, the melter device melting resin material (resin pellets).

### Background Art

Typically, resin injection molding apparatuses include a screw-type apparatus as described in Patent Literature 1, and a plunger-type apparatus as described in Patent Literature 2. The screw-type injection molding apparatus mainly includes a cylinder and a screw, heats and melts pellets made of resin received from a hopper in a process of pressing and transferring them toward an ejection nozzle by the screw rotating in the cylinder, and ejects the molten resin from the distal end of the nozzle into a mold. In general, the low thermal conductivity of resin pellets, the low pellet melting efficiency in the pressing process, the necessity of securing a large amount of pellets and the like increase the size and complexity of the injection molding apparatus. The load of the replacement operation due to wear of the screw is high.

On the other hand, in the case of the plunger-type injection molding apparatus, this apparatus includes: a melter device that includes a heater element formed in a frustum (a remaining portion of a solid cone with the top being cut off by a plane parallel to the base, such as a truncated solid cone or a truncated pyramid) mainly having many through-holes; an ejection plunger; and a supply tube. Resin raw material is fed to the melter device by the ejection plunger, and ejection is performed. This apparatus is advantageous for downsizing due to a relatively simple structure. Even such a plunger-type injection molding apparatus has large void chambers in a gap between the distal end of the plunger and the melter device, and in a gap between the distal end portion of the plunger and the supply tube, the resin raw material cannot effectively flow into the through-holes of the melter device, remains in the void chambers, and hinders the new resin raw material from being transferred thereafter, and the long-residing and deteriorated resin mixes with new resin, thus causing problems.

To solve the problems, the present inventors have developed an injection molding apparatus that causes the aggregation of pellets as described in Patent Literature 3 and the like to pass through a large number of conical holes of the melter device by only pressing the pellets with the plunger, and thus allows the pellet resin melting process to the molten resin ejection process to be efficiently achieved, and have achieved improvement in the melting rate and the ejection time period as described in Patent Literature 4 and the like.

### Citation List

### Patent Literature

Patent Literature 1: Japanese Patent Laid-Open No. 6-246802
Patent Literature 2: Japanese Patent Publication No. 36-9884
Patent Literature 3: Japanese Patent No. 4880085
Patent Literature 4: International Publication No. WO2014/185514

### Summary of Invention

### Technical Problem

Unfortunately, even the injection molding apparatuses in Patent Literatures 3 and 4 and the like described above have points to be further improved. Specifically, the resin material is required to be melted while passing through the through-holes provided in the melter device. Thus, a scheme of heating the frustum-shaped melter device on the outer periphery side by the heater has a limitation in uniformly and rapidly heating a large amount of resin material in a range to the through-hole around the center of the melter device. Therefore, the structure of the melter device suitable for melting a large amount of resin material is required to be provided, and the material is required to be selected (demand for improving the size, and reduction in cycle time). In particular, in a case of resin material such as a bioplastic that does not melt at high temperatures, the structure of ejecting a large amount with melting at a certain low temperature is required to be provided, or the material is required to be selected. In the case of resin material such as high-strength fibers, the melter device requires a high wear property.

In view of the above description, the present invention has been invented, and has an object to provide a melter device for a plunger-type injection molding apparatus that has a vertical type structure, includes no resin extrusion screw, is capable of uniform and rapid heat input even with low power, and can form an injection-molded object made of resin material with a large amount.

### Solution to Problem

The present invention is
a melter device for a plunger-type injection molding apparatus that has a vertical structure and includes no resin extrusion screw, the melter device melting resin material (resin pellets), wherein
the melter device includes:
   a melter portion that forms a rectangular box-shaped housing structure, and internally has a plurality of melt ports that completely penetrate upward and downward and have areas of penetrating portions that do not increase from top toward bottom; and
   a melter device heater portion that is provided on one side of a large-width outer wall of the melter portion so as to supply heat to an extent to at least a lower part on the outer wall, and accommodates the heating instrument.

The melter device for the injection molding apparatus in the present invention is a melter device for a plunger-type injection molding apparatus that has a vertical structure, receives resin material (resin pellets) from the top, transfers and melts it in the melter device, and ejects it from a lower part. In particular, the melter portion that melts the resin at the middle of transfer to the lower part has a rectangular box-shaped housing structure, and the melter device heater portion that accommodates the heater for heating the melter portion on one or both sides of the outer wall on the large-width side is arranged.

In the conventional cylindrical melter device that has a plurality of through-holes, heaters are attached to the outer peripheries, and heat the melter device from the peripheries. Accordingly, the thermal conduction is largely different between the through-holes (corresponding to melt ports in the present invention) adjacent to the outer periphery, and the through-holes adjacent to the center, uniform heating is difficult, which hinders increase in size. However, the present melter device for the injection molding apparatus has the rectangular box-shaped housing structure, and has a structure that attaches the heater-accommodating portions to the outer walls having large surface areas. Accordingly, since the distance from each heater to each melt port is small, and the variation in distance is small, the structure achieves a favorable thermal conduction, can perform uniform heating, and facilitates increase in size with the heaters with low power.

Furthermore, it is preferable that the melter device heater portions should be arranged on both the large-width outer walls of the melter portion, and make the melter portion interposed therebetween in the small-width direction.

In a case where the melter device heater portions are arranged on both the large-width outer walls of each melter portion with each of the melter portions interposed between both sides, and a plurality of melter devices are arranged in parallel to constitute a large-sized melter unit as described later, heat can be supplied from both the sides adjacent to the internal melt ports with equal distances in each melter device, and even with the unit configuration, the resin material can be melted uniformly and rapidly. Note that it can be conceivable that melter device heater portions are additionally arranged on one side or both the sides of small-width outer walls of each melter portion, and supply heat from the peripheries.

In the case where the melter device heater portions are arranged not only on the large-width outer walls but also on the small-width outer walls, heat can be supplied to the melt ports more uniformly, and it is particularly effective in a case with thick melter portions.

Preferably, the melter device includes a plurality of the melter portions, and the melter device heater portions interposed between the corresponding melter portions in the small-width direction such that these portions are arranged in parallel, with the outer walls facing each other in the small-width direction.

The present melter device for the injection molding apparatus is formed as a unit in which a plurality of melter portions are arranged in parallel (hereinafter simply called "unit type"), and the melter portions are arranged in parallel to be interposed between the heater portions. As described above, the melter portions each have the rectangular box-shaped housing structure, and are arranged in parallel to face each other, which can increase and reduce the number of melter devices arranged in parallel as appropriate depending on the amount of resin material desired to be melted, and it is advantageous in that it is easy to change and support a small amount of ejection to a large amount of ejection as required. In this case, the heater-accommodating portions are arranged with the melter portion interposed therebetween, and heat from the heaters on both the sides is transferred to the melter device, which can sufficiently heat the resin material in the melt ports with power-saving heaters, thus preventing overheat. Accordingly, the operating lives of the heater-accommodating portions and the melter portions can be increased, and it is advantageous for reducing the replacement load. Note that the melter portions are thus arranged in parallel, which achieves the configuration that prevents the resin material from entering and remaining in the gaps between the adjacent melter portions, specifically, the boundary between the melter portion and the melter portion, and the boundary between the melter portion and the heater-accommodating portion. This prevents difficulties in appropriately controlling the amount of ejection due to the resin material remaining on the boundaries, and prevents resin material used for the previous ejection process from being mixed in the current resin material.

The plurality of melt ports included in the melter portion
can each include a substantially identical, substantially quadrangular section in a horizontal direction, be each arranged along the large-width direction and form a row, and be each inclined so as to have a horizontal sectional area at a lower part that is less than or equal to a horizontal sectional area at an upper part.

Since each melter portion has the rectangular box-shaped housing structure, and the internally provided melt ports are openings that have substantially quadrangular (including, for example, rectangular shapes having R-shaped corners) horizontal sections, and are arranged to form a row (single or multiple rows), partitions between the melt ports can be made thinned as much as possible, and compact arrangement can be achieved, thus achieving a high aperture ratio. That is, with respect to the size of each melter portion, the maximum resin material entering area can be secured. Furthermore, since the melt ports that have quadrangular horizontal sections and are inclined not to increase the areas from top toward bottom, inner walls having smooth surfaces can be relatively easily formed.

Preferably, the plurality of melt ports included in the melter portion
each include a substantially identical, substantially quadrangular section in a horizontal direction, and are each arranged along the large-width direction and form a row, and
the melt ports of the melter portions that are adjacent to each other are arranged so as to deviate in a large-width direction from each other.

In the case of this unit-type ejection molding melter device, the melt ports in the melter portion are arranged to deviate in the large-width direction. Consequently, heat from the melter device heater portion does not pass through the spaces in the melt ports much, and generally passes through the melter portion material, and is transferred to the adjacent melter portions. In detail, the heat from the melter device heater portion does not pass through the resin material with a low thermal conductivity in the melt ports and air layers, and is transferred through the melter portion material with a high thermal conductivity (typically, cemented carbide). Accordingly, even in the case of the unit type where the melter portions are stacked and arranged, the resin material can be uniformly and efficiently melted.

The melter portion includes: a main body portion that includes a plurality of groove portions that open on one side surface side, extend upward and downward, and are closed on an opposite side surface side serving as an outer wall; and a lid member that is attached to and faces the side surface of the main body portion on one direction side, and blocks the groove portions of the main body portion such that the groove portions of the main body portion and the lid member form the melt ports in a blocked state.

Each melter portion in the melter device for the injection molding apparatus is configured to include two members (hereinafter, also simply called "split-type melter portion") that are a main body portion that includes groove portions opening on the side surface on one direction side, and a lid portion that is attached to and faces the open side of the main body portion, and blocks the groove portion, and can form the melt ports only by attaching both in an overlaid manner. Note that in the case of manufacturing the melter portion from cemented carbide, it is preferable that the main body portion and the lid portion should be overlaid together and then attached to each other by an adhesive heat treatment. Adoption of such a structure can manufacture the main body portion only by cutting out the groove portions that are open conduits from a plate-shaped member, and manufacturing with a mold. Accordingly, only by closing this with the lid member, the melter portion that internally has melt ports can be fabricated. In particular, in the case of the unit-type melter device that arranges the melter portions in parallel depending on the amount of resin material intended to be ejected as described above, this structure is advantageous.

The lid member of the melter portion may be freely selected as the closed outer wall of the main body portion of another melter portion, or an outer wall of the melter device heater portion.

In the case of the split-type melter device for the unit-type injection molding apparatus as described above, the lid portion that closes the main body portion provided with open conduits as the melt ports is not prepared separately as an independent member, and the outer wall of another melter portion and the outer wall of the heater-accommodating portion are configured to also serve as the lid portion. This can significantly reduce the number of components, and in turn reduce the size of the entire unit.

Furthermore, the melter portion is formed of cemented carbide.

The cemented carbide is a sintered compact made from powders of tungsten carbide (WC), and cobalt (Co) that is binder metal, and in some cases, titanium carbide (TiC) or tantalum carbide (TaC) is added. In a case of forming the melter portion using such cemented carbide, the wear resistance is high due to its high hardness, and it is excellent also in a case of ejecting resin material, such as high-strength fibers.

Since the cemented carbide has high thermal conductivity, the inside of each melt port can be sufficiently heated even without making the heaters at a high temperature higher than required, and it is also advantageous for achieving rapid and uniform heating control. The cemented carbide is manufactured by performing pressure molding and sintering on uniformly mixed powders of tungsten carbide (WC) and cobalt (Co), with a press or the like. Accordingly, even if the hardness is high, it is also advantageous for facilitating processing as long as the structure made up of the main body portion and the lid portion as the aforementioned split-type melter device is adopted.

Note that as another melter device for an injection molding apparatus, there is provided a melter device for a plunger-type injection molding apparatus that has a vertical structure and includes no resin extrusion screw, the melter device melting resin material (resin pellets).

The melter device includes:
a cylindrical melter portion that internally has a plurality of melt ports that completely penetrate upward and downward, and each have a bore sectional area decreasing or at least not increasing from top toward bottom, and is formed of cemented carbide; and
a heating instrument provided on an outer periphery of the melter portion, wherein
the melt ports each have a port diameter and are configured to have the number of ports so as to achieve a preliminarily calculated aperture ratio depending on the resin material and a desired amount of ejection.

Similar to the conventional case, the aforementioned other example of the melter device for the injection molding apparatus adopts the cylindrical melter device, and the material is cemented carbide. Conventionally, the melter device has been manufactured from copper (Cu) or the like, which has a relatively high thermal conductivity, but in a case of resin material such as high-strength fibers, the melter device is required to have high wear resistance as described above. This requirement can be satisfied by adopting cemented carbide that has high strength and high thermal conductivity, as the material of the melter device.

Note that cemented carbide is a sintered compact formed using a mold, and the melt ports are required to be made by boring after the cylindrical shape is formed. On the other hand, since the toughness is low, it is required to prevent the distance between the melt ports from reducing too much and prevent cracking. Accordingly, the cylindrical melter device is advantageous in that the appropriate aperture ratio depending on the resin material and the required amount of ejection is preliminarily calculated, it is controlled to provide the port diameter and the number of ports that allow the required aperture ratio to be secured, the drawbacks of the low toughness of the cemented carbide are avoided, and the melter device for high-strength resin material is provided.

An injection-molded object made of the resin material molded by the aforementioned melter device for the injection molding apparatus in the present invention is also provided.

The resin material may be long-fiber thermoplastic resin, and is 3 mm or more, and preferably, 5 mm or more.

The melter device has thus been described above is advantageous in that the size is small but can achieve a large amount of ejection, while allowing various resin materials (resin pellets) to be supported as appropriate. An injection-molded object that is formed as a commodity mass-produced by the melter device and has not been achieved yet can also be provided. In particular, long-fiber thermoplastic resin has high mechanical strength and low weight, and has many advantages over metal and conventional resin, and the market is expected to expand in the future. Since the present melter device includes the substantially rectangular box-shaped housing made of cemented carbide, and has melt ports having quadrangular cross sections, using the present melter device can easily mass-produce such long-fiber thermoplastic resin. In particular, an injection-molded object made of long-fiber thermoplastic resin with 3 mm or more, preferably, 5 mm or more, demonstrates that it has been manufactured by the present invention.

Preferably, the injection molding apparatus including the melter device for the injection molding apparatus in the present invention includes a melt cone portion that receives the resin material released from the melt ports at a lower part of the melter portion of the melter device, and releases the resin material downward, wherein
the melt cone portion
has an inner through-hole including: an inlet at an upper part that receives the resin material released from the melt ports, and has a substantially quadrangular bore; and an entire or a partial range that is from the inlet to an outlet at a lower part and has a substantially quadrangular pyramid shape with an apex indicating downward.

A melt cone portion that receives (merges), at the lower part, the resin material melted by the melter portion, and guides it to a nozzle portion for releasing it toward the mold is coupled to the melter device for the injection molding apparatus in the present invention having been described above. The melt cone portion has an inner through-hole that has an inverted quadrangular pyramid shape portion having a horizontal sectional area decreasing downward from the substantially quadrangular inlet on the melt port side. Since each melter portion is substantially quadrangular in the case of the melt cone portion having such a structure, it is advantageous in that the entire molten resin material from the melt ports can be merged at the inlet having a substantially quadrangular bore, and be transferred downward.

Preferably, in the injection molding apparatus including the melter device for the injection molding apparatus described above,
in the melt cone portion,
over a plurality of melter portions adjacent each other among the melter portions arranged in parallel, molten resin released from the melt ports of the plurality of melter portions is merged into the inlet at the upper part of the inner through-hole and releases the molten resin from the lower part of the inner through-hole.

In the case where the present injection molding apparatus has the structure where the melter portions are arranged in parallel in the small-width direction, the melt cone portion that receives the molten resin material may be provided for each melter device, but according to the present example, the melt cone portion that is arranged downward over the adjacent melter portions, merges the molten resin material released from these melter portions, transfers it downward, and releases it can be provided. According to the example of such a melt cone portion, a structure can be provided that allow easy customization to an injection molder that includes a plurality of melter portions in parallel and manufactures an injection-molded object that requires a large amount of resin, while easily controlling the amount of ejection.

The inner through-hole of the melt cone portion may be formed in a slit shape with the outlet at the lower part extending in the small-width direction of the melter portions.

In this case, in the inner through-hole of the melt cone portion with the outlet at the lower part being formed in the slit shape, the outlet with the slit shape may have a width changing at a middle of the outlet in a longitudinal direction.

For the melt cone portion described above, the case where the outlet (release port) has a hole shape is typically assumed. If the outlet (release port) of the melt cone portion has a hole shape, a release port of a nozzle (described later) coupled thereto also has a hole shape. Thus, in a case where the molten resin material is ejected from the plurality of ejection ports of the nozzle, the ejected resin material is temporarily separated, merged, cooled, and solidified. Accordingly, weld lines tend to occur, and the strength and appearance are sometimes unfavorable. With respect to this point, if the outlet of the melt cone portion has a large-width slit shape, the resin material can be prevented from being separated and ejected, occurrence of weld lines can be prevented, and an injection-molded object with a favorable final strength and appearance can be manufactured.

If the outlet of such a melt cone portion has a slit shape, the width of the slit can be changed in the middle. For example, if the slit width is increased at a portion where the thickness of the injection-molded object is intended to be increased, the molten resin material is ejected (fallen) in the longitudinal direction at the same rate (uniformly), and a molded object that has a thickness uniformly varying without causing any weld line can be manufactured.

It is preferable to provide melt cone heater portions that each accommodate the heating instrument on outer walls of the melt cone portion on both the sides so as to supply heat to the inner through-hole.

In the example described above, by providing the melt cone portion, at the outer wall, with a heater portion similar to that for the melter portion, heat enters the entire flow path for the molten resin material from the melter portion to ejection at the nozzle (described later). Accordingly, the viscosity of the molten resin material can be always prevented from increasing. As a result, there is no need to supply more heat than required by the melter portion, the power for the injection molding apparatus can be reduced, and the unevenness of heat transfer can also be reduced.

Preferably, a nozzle portion is provided at a lower end of the melt cone portion, the nozzle portion receiving molten resin material from the outlet of the melt cone portion and ejecting the molten resin material at a lower part, wherein
the nozzle portion
includes an inner flow path that has a horizontal sectional area decreasing from the inlet at the upper part toward an ejection port at the lower part, and a spot facing portion which is formed at the upper part of the inner flow path, into which the lower part of the melt cone portion is inserted, and which serves as a stopper against intrusion to the lower part, and
the lower end of the melt cone portion and an upper end of the nozzle portion are coupled to each other from outer peripheries of both by a coupling jig.

The melt cone portion has been described above is coupled at its lower end to the nozzle portion for ejecting the molten resin material. According to the nozzle portion provided at the lower end of the melt cone portion, positioning in the vertical direction is facilitated only by providing a spot facing serving as a stopper for supporting insertion of the lower end of the melt cone to thereby allowing the upper part of the inner flow path to be inserted, and by fastening is achieved by a coupling jig (nut or the like), and the inner flow path has a horizontal sectional area decreasing toward the ejection port, which allows the molten resin material to be sufficiently merged at the ejection port, can achieve a large amount and rapid ejection. Even with the reduced distal end of the melt cone portion, the nozzle portion itself can be shortened because fastening is securely achieved only by insertion into the upper part of the nozzle portion. Accordingly, fine surface processing such as tapering of the inner flow path is not required, and the cost of the nozzle portion can be reduced.

Furthermore, since the case of the nozzle portion described above adopts the structure of uniformly fastening the lower end of the melt cone portion to the upper end of the nozzle portion from the outer periphery side, the coupling jig can be manufactured by a process of matching and pasting with respect to the central axis, and it is also advantageous in that even if it is manufactured from a super-hard sintered object, it can be provided without significantly increasing the processing cost.

Preferably, the outer peripheral wall of the nozzle portion has a diameter decreasing stepwise in a vertical direction.

In this case, the external shape of the nozzle portion is the shape with the horizontal sectional area decreasing stepwise, and the diameter of the lower end of the through-hole of the coupling jig (nut or the like) between the melt cone portion and the nozzle portion is reduced, which allows the fastening force in the vertical direction to be substantially uniformly applied to the entire coupling portion of the coupling jig. While the tapered external shape has too strict tolerance and significantly increases the cost, this problem of tolerance does not occur because no force is applied in the radial direction with the stepwise external shape, and it is advantageous in also extending the operating life of the coupling jig.

Preferably, washers made of a high thermal conductivity metal are inserted into and arranged in a gap between the spot facing portion of the inner flow path of the nozzle portion and the lower end of the melt cone portion, and a gap between a diameter reducing portion at the lower end of the coupling jig and a stepwise portion of the outer periphery of the nozzle portion.

By inserting the washers into the gap between the melt cone portion and the nozzle portion and the gap between the nozzle portion and the coupling jig (nut or the like), the molten resin material can be prevented from leaking, and a structure having a high thermal conductivity can be provided.

Note that, preferably, the heat transfer fins are provided on the outer wall of the coupling jig.

It is advantageous in that by arranging the heat transfer fins on the outer wall of the coupling jig, the outer surface area increases, and the cooling and heating effect by the coupling jig increases.

Furthermore, it is preferable that on a surface that is made of cemented carbide and accommodates the heating instrument in the melter device heater portion and/or the melt cone heater portion,
there should be formed an insulating layer made of ceramic generated by thermal spraying, and a heater layer formed by nickel-based alloy plating on a surface of the insulating layer.

The insulating layer that is generated by thermal spraying and made of ceramic is provided on the surface of the heater portion that accommodates (arranges) the heating instrument, such as a heating wire, and a thin heater layer formed by high-resistance nickel-based alloy plating is provided thereon, which significantly improves the heater performance in terms of melting of resin material. Specifically, conventionally, while band heaters have mainly been used for heating containers, an air layer with a low thermal conductivity intervenes between a band heater and a melter device, and a problem of thermal transfer of resin material is caused by the air layer. In contrast, heater layers that are formed of a heating wire or the like serving as a heat source and by nickel-based alloy plating are provided on the insulating layers of the present melter device heater portion and the melt cone heater portion, which can form ultrathin (e.g., 10 micrometers) heater layers in which no air layer intervenes between the heater layer and the super-hard member and which is excellent in thermal conductivity. Accordingly, it is significantly advantageous in that the melter device and the melt cone can be reduced in size, and a large-capacity injection molder can be provided in a narrow space.

### Advantageous Effects of Invention

The melter device for the injection molding apparatus in the present invention can provide a plunger-type injection molding apparatus that has a vertical type structure, includes no resin extrusion screw, is capable of uniform and rapid heat input even with low power, and can form an injection-molded object made of resin material with a large amount.

### Brief Description of Drawings

[Figure 1] Figure 1 shows a melter device example 1 that is a first present invention and includes three melter portions and a heater-accommodating portion.
[Figure 2] Figure 2 shows a main body portion of a four-port melter portion in the melter device example 1.
[Figure 3] Figure 3 shows the main body portion of the four-port melter portion in the melter device example 1.
[Figure 4] Figure 4 shows a heater-accommodating portion in the melter device example 1.
[Figure 5] Figure 5 is an exploded perspective view showing each configuration member in a melter device example 2 in the first present invention.
[Figure 6] Figure 6 shows a melter device example 3 in the first present invention.
[Figure 7] In Figure 7, (a) and (c) show a melter device example 1 in a second present invention, and (b) and (d) show a melter device example 2 in the second present invention.
[Figure 8] In Figure 8, (a) is a perspective view of the melter device example 1 in the second present invention, and (b) is a perspective view of the melter device example 2 in the second present invention.
[Figure 9] Figure 9 shows a bottom nozzle provided below each of the melter device examples in the first and second present inventions, and a heater-accommodating portion around the bottom nozzle.
[Figure 10] In Figure 10, (a) is a top view of each melter device included in a melter device example 4 in the second present invention, and (b) is a top view of the melter device example 4 where the melter device shown in (a) is combined.
[Figure 11] Figure 11 shows photographic diagrams of a melter device 710 as a fourth melter device embodiment, (a) is a schematic top photographic diagram of the melter device, (b) is a schematic bottom photographic diagram showing the opposite side of (a), and (c) is a perspective photographic diagram allowing a melter device heater portion on the side of the melter device to be viewed.
[Figure 12] Figure 12 is a schematic longitudinal sectional view showing a situation where a melt cone portion and a nozzle portion are coupled to the melter portion in Figure 11, (a) shows a coupling example 1, and (b) shows a coupling example 2 that is an improvement of (a).
[Figure 13] Figure 13 is a perspective view showing a state where the melt cone portion and the nozzle portion in Figure 12 are coupled.
[Figure 14] Figure 14 is a perspective view of the melt cone portion viewed from obliquely upper right of Figure 13.
[Figure 15] Figure 15 is a longitudinal sectional view of Figure 13.
[Figure 16] In Figure 16, (a) is a schematic top view of a single melter device shown in Figure 11, (b) is a schematic top view showing a situation where the melt cone portion is arranged over the melter device in (a), and (c) is a schematic side view of the melt cone portion in (b).
[Figure 17] Figure 17 shows a modified example of an outlet of a melt cone portion in Figure 16 from the same viewpoint by the same method as Figure 16, (a) is a schematic top view of the single melter device, (b) is a schematic top view showing a situation where the melt cone portion is arranged over the melter device in (a), and (c) is a schematic side view of the melt cone portion in (b).
[Figure 18] Figure 18 is a modified example of Figure 17, (a) is a schematic top view of a single melter device, (b) is a schematic top view showing a situation where the melt cone portion is arranged over the melter device in (a), and (c) is a schematic side view of the melt cone portion in (b).

### Best Mode for Carrying Out the Invention

An injection molding apparatus that melts resin pellets, among plunger-type injection molding apparatuses that have a vertical structure and include no resin extrusion screw, presses an aggregation of resin pellets as shown in Patent Literature 3 and the like by a plunger, and ejects it downward while melting it and causing it to pass through the melt ports in the melter portion, and the present invention provides a new melter device, and an injection molding apparatus that includes the melter device. Specifically, the present invention provides two types of melter devices, and a melt cone portion and a nozzle portion of an injection molder that includes the melter device as described above, and among these melter devices, an example of a melter device having a substantially rectangular box shape, an example of a cylindrical melter device made of cemented carbide being the other type, a melt cone portion example, a nozzle portion example and the like are exemplified and described below.

### <<Substantially Rectangular Box-Shaped Melter Device Example 1 for Injection Molding Apparatus in Present Invention>>

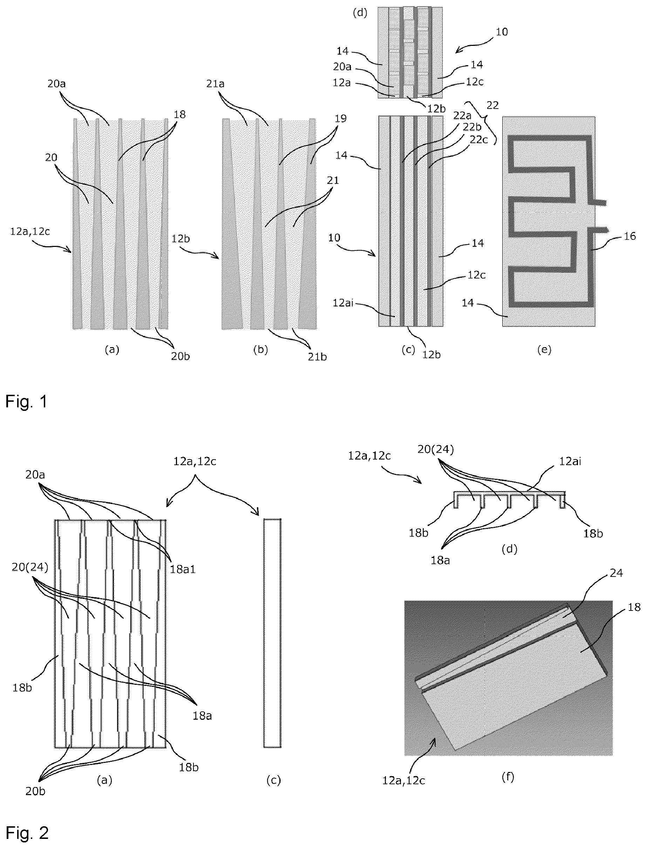

As a first example of a melter device for an injection molding apparatus in the present invention, a melter device 10 is described below with reference to Figures 1 to 4 and 11. First, Figure 1 shows the present melter device 10 that includes three melter portions 12 and melter device heater portions 14, (a) is a schematic side view of a melter portion 12a of the melter device 10, (b) is a schematic side view of a melter portion 12b of the melter device 10, (c) is a schematic front view of the melter device 10, (d) is a schematic top view of the melter device 10, and (e) is a schematic side view of the heater-accommodating portion 14 of the melter device 10.

As shown in the front view (Figure 1(c)) and the top view (Figure 1(d)), sequentially from a side in a small-width direction (the lateral direction in Figure 1(c)), the melter device 10 for the injection molding apparatus includes a four-port melter portion 12a, a three-port melter portion 12b, and a four-port melter portion 12c, which each have a plate shape, caused to face each other and stacked, and constitute this melter device 10 having a single housing structure. As shown in Figure 1(e), the melter portions 12 are clamped on its opposite sides by melter device heater portions 14 to which plated layers (described later) each internally including a heating wire 16 on the outer wall side are respectively applied on the corresponding surface. As described later, the four-port melter portion 12a, the three-port melter portion 12b, and the four-port melter portion 12c each include a main body portion that opens on one side surface, and a lid member that closes on the opposite side. In the case of the melter device 10 shown in Figure 1, the four-port melter portion 12a, the three-port melter portion 12b, and the four-port melter portion 12c are configured by pasting lid members 22a, 22b, and 22c to the respective main body portions (in present Description, the main body portions of the four-port melter portions 12a and 12c, and three-port melter portion 12b are sometimes simply represented as the four-port melter portion 12a, 12c, and the three-port melter portion 12b, or the main body portion 12a, 12c, and the main body portion 12b). The four-port melter portions 12a and 12c, the three-port melter portion 12b, and the heater-accommodating portions 14 are specifically described below.

Figure 2 shows the main body portion 12a, 12c of the four-port melter portion, (a), (c), and (d) of Figure 2 are from a viewpoint substantially identical to that of (a), (c), and (d) of Figure 1, (a) is a side view of the four-port melter portion 12a, 12c, (c) is a front view of the main body portion 12a, 12c of the four-port melter portion, (d) is a top view of the main body portion 12a, 12c of the four-port melter portion (from the view rotated clockwise by 90° from the top view of Figure 1 (d)), and (f) is a perspective view for exemplifying each groove portion 24 as one of the four ports of the main body portion 12a, 12c of the four-port melter portion.

As shown in (a) and (f) of Figure 2, the main body portion 12a, 12c of the four-port melter portion is provided with groove portions 24 formed so as not to increase their horizontal sectional area of the plate-shaped member from top toward bottom (the groove portions 24 may include a portion with an area not varying in the vertical direction), and four melt ports 20 are formed. Both the sides of each groove portion 24 (melt port 20) are inclined at the same angle in the opposite directions such that the width in the large-width direction (the lateral direction in Figure 2(a)) decreases from the top where resin pellets are received. The groove portions 24 (melt ports 20) include rectangular concave portions in the main body portion 12a, 12c, and as shown in Figure 2(d), each groove portion 24 is a quadrangular open conduit with a horizontal section opening on the side (downward in Figure 2(d)). Four groove portions 24 are provided in a row along the large-width direction by outer frames 18b on the opposite sides of the main body portion 12a, 12c in the large-width direction, and inner frames 18a each serving as a partition of the groove portions 24.

The plate-shaped lid member 22 (see (a) and (c) in Figure 1) is attached to the main body portion 12a, 12c from the side (from the bottom in Figure 2(d)), and the groove portions 24 are closed, thus forming four melt ports 22 in the large-width direction; the melt ports 22 are each formed to have a structure which has a quadrangular horizontal section and the horizontal sectional area not increasing from top toward bottom in the melter portion 12a, 12c (the lower horizontal sectional area is less than or equal to the upper horizontal sectional area). In particular, according to the example of the four-port melter portion 12a, 12c in Figures 1 and 2, since cemented carbide made by forming with a mold from powder, such as of tungsten carbide (WC) and sintering it is used, as described later, the melt ports 20 can be fabricated by providing the open groove portions 24 in the plate-shaped member, such as the main body portion 12a, 12c.

Since the melt ports 20 are made by providing the groove portions 24 in the plate-shaped member of the main body portion 12a, 12c, the lengths in the plate thickness direction (the vertical direction in Figure 2(d)) are the same lengths from an inlet opening 20a to an outlet opening 20b, and as shown in Figure 2(a), the large-width direction is linearly inclined from both the sides, and the length in the large-width direction is reduced, which gradually reduces the opening area from the inlet opening 20a having a quadrangular cross-section to the outlet opening 20b. In this case, the area of the inlet opening 20a largely affects the allowable feeding amount of resin pellets into the melter portion 12a. In this sense, the aperture ratio of the inlet opening 20a is required to be as large as possible, and the thicknesses of frame portions 18 (inner frames 18a and outer frames 18b) at the respective inlet openings 20a are required to be small. As described later, in the case of the melter portion 12a, it is manufactured from cemented carbide, and it is known that the aperture ratio of each inlet opening 20a is about 58%. In contrast, it is known that in the case where a typical, conventional, cylindrical melter portion is manufactured from copper (Cu), it has an equivalent aperture ratio, and if it is manufactured from after-mentioned cemented carbide (WC or the like), only a significantly smaller aperture ratio (about 28%) can be achieved due to the low toughness. Consequently, the aperture ratio of the inlet opening 20a of the melter device 12a is large, and it is particularly significant in the case where cemented carbide is adopted as the raw material.

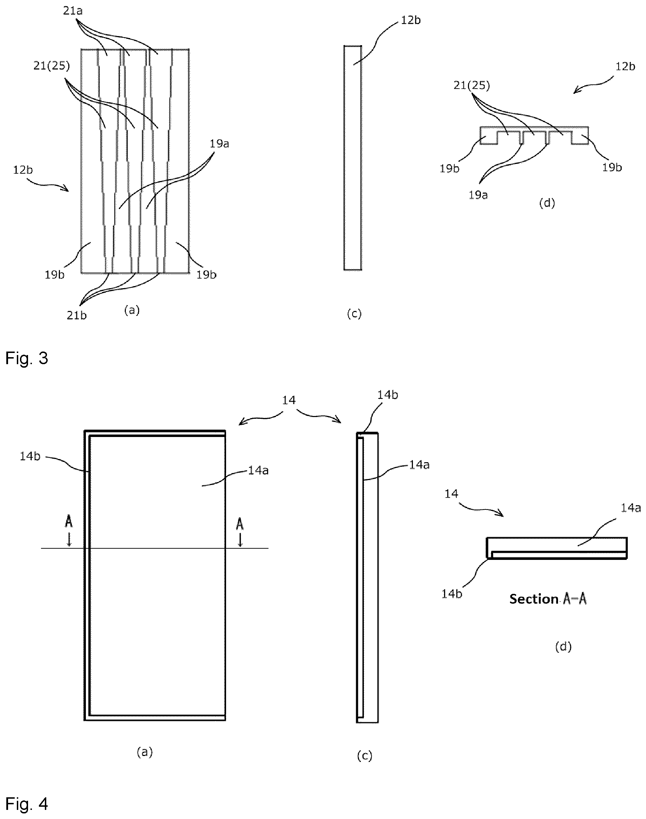

Next, Figure 3 shows the main body portion 12b of the three-port melter portion, and similar to Figure 2, (a), (c), and (d) of Figure 3 are from viewpoints substantially identical to those of (a), (c), and (d) of Figure 1, respectively, and (a) is a side view of the main body portion 12b of the three-port melter portion, (c) is a front view of the main body portion 12b of the three-port melter portion, and (d) is a top view of the main body portion 12b of the three-port melter portion (the same viewpoint as that of Figure 2(d)). Note that the perspective view for exemplifying the groove portion 25 as that of one of three main body portions 12b of the three-port melter portion is omitted, and Figure 2(f) showing the perspective view of the groove portion 24 of the main body portion 12a, 12c of the four-port melter portion is referred to instead.

Similar to the main body portion 12a, 12c of the four-port melter portion, the main body portion 12b of the three-port melter portion is provided with groove portions 25 formed to have a structure where inclined surfaces at the same angle in the opposite direction on both the sides so as to reduce the width of the large-width direction (the lateral direction in Figure 3(a)) in the vertical direction of the plate-shaped member are formed, and the area of the horizontal section does not increase from top toward bottom (the lower horizontal sectional area is less than or equal to the upper horizontal sectional area), thus forming three melt ports 20. Likewise, three groove portions 25 (melt ports 21) each have a quadrangular open conduit having a horizontal-directional section opening on the side (downward in Figure 3(d)) in the main body portion 12b, and are thus provided in a row along the large-width direction by outer frames 19b on both the sides of the main body portion 12b in the large-width direction, and inner frames 19a serving as partitions between the groove portions 25.

As described above, three melt ports 21 that each have a quadrangular horizontal section and taper at the same inclined angle in the large-width direction are formed in the melter portion 12b by attaching a plate-shaped lid member 22 (see (a) and (c) of Figure 1) to the main body portion 12b, and closing the groove portions 25, and this configuration is suitable for a case of using cemented carbide made by being formed with a mold and sintered as described above.

Similar to the main body portion 12a, 12c of the four-port melter portion in Figure 2, the main body portion 12b has the melt ports 21 formed by providing the groove portions 25 having a quadrangular sections in the plate-shaped member, the aperture ratio of each inlet opening 21a is required to be as large as possible to increase the resin pellet feed rate because the length in the plate thickness direction (the vertical direction in Figure 3(d)) is constant, and the thickness of the frame portion 19 (the inner frame 19a and the outer frame 19b) at the position of the inlet opening 21a is required to be small.

Figure 4 shows the melter device heater portion 14. Similar to Figures 2 and 3, (a), (c), and (d) of Figure 4 are from viewpoints substantially identical to those of (a), (c), and (d) of Figure 1, respectively, and (a) is a side view of the melter device heater portion 14, (c) is a front view of the melter device heater portion 14, and (d) is a sectional view taken along line A-A of (a).

The melter device heater portion 14 is made of cemented carbide, and includes a frame portion 14b along both the upper and lower edge portions and one side edge portion of the plate-shaped member, and a heater-mounted surface 14a that defines a flat surface lower than the frame portion 14b. An insulating layer is provided on the polished cemented carbide surface on the heater-mounted surface 14a by thermal spraying ceramic such as alumina (aluminum oxide) or the like, and plating with a nickel-based alloy having a high electrical resistance on the surface of the insulating layer, thus forming a heater layer (not shown) to which the heating wire 16 as shown in Figure 1(e) is attached. By adopting such a structure, the heater layer which no air layer intervenes between this heater layer and the cemented carbide member and which is excellent in heat conductivity and is ultrathin (e.g., 10 micrometers) can be formed.

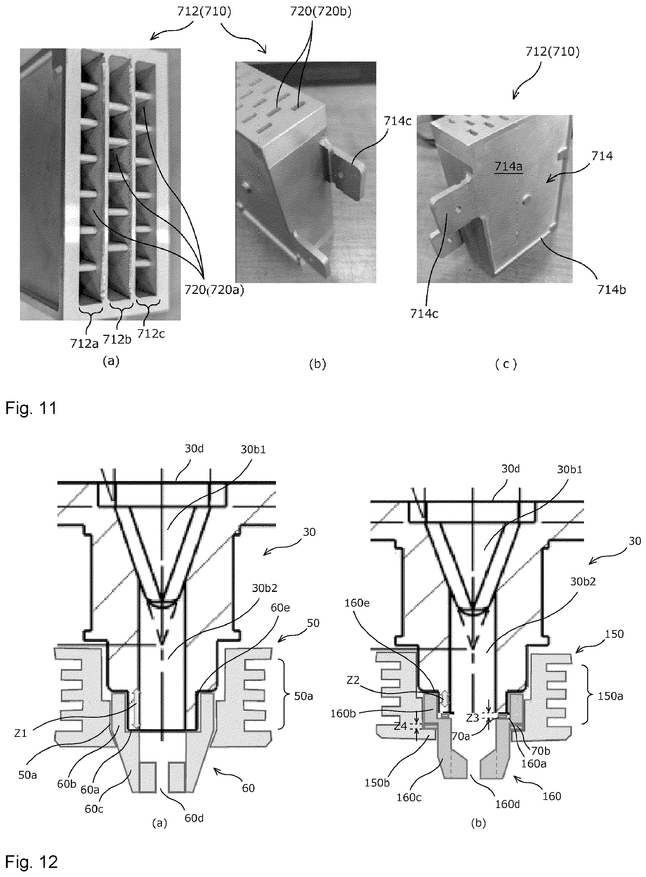

Furthermore, in the heater layer, a heat-resistant insulating film is painted on the nickel-based alloy plating layer in order to prevent short circuit or electric shock due to exposure of an energized surface. Note that at an end portion of the heating wire 16, the plate-shaped piece (see a plate-shaped piece 714c in Figure 11(c)) protrudes outward from the other side portion (the right in Figure 4(a)) without the frame portion 14b, the plate-shaped piece (714c) is connected to an external power source (not shown), the heating wire 16 and the plated layer generate heat, and the heat is transferred to the entire melter device heater portion 14, thereby functioning as the ultrathin heater layer.

### <<Substantially Rectangular Box-Shaped Melter Device Examples 2 to 4 for Injection Molding Apparatus in Present Invention>>

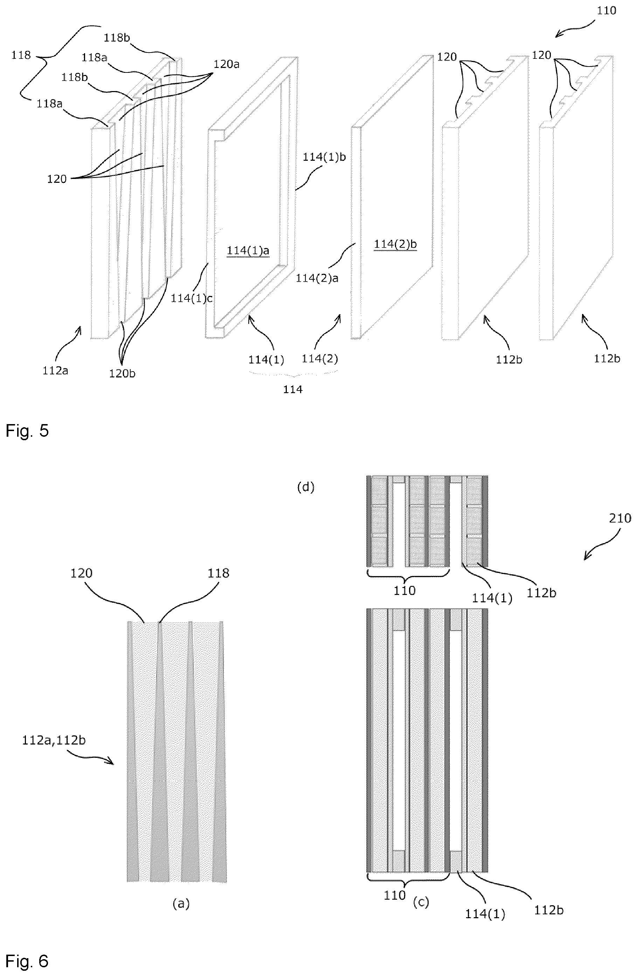

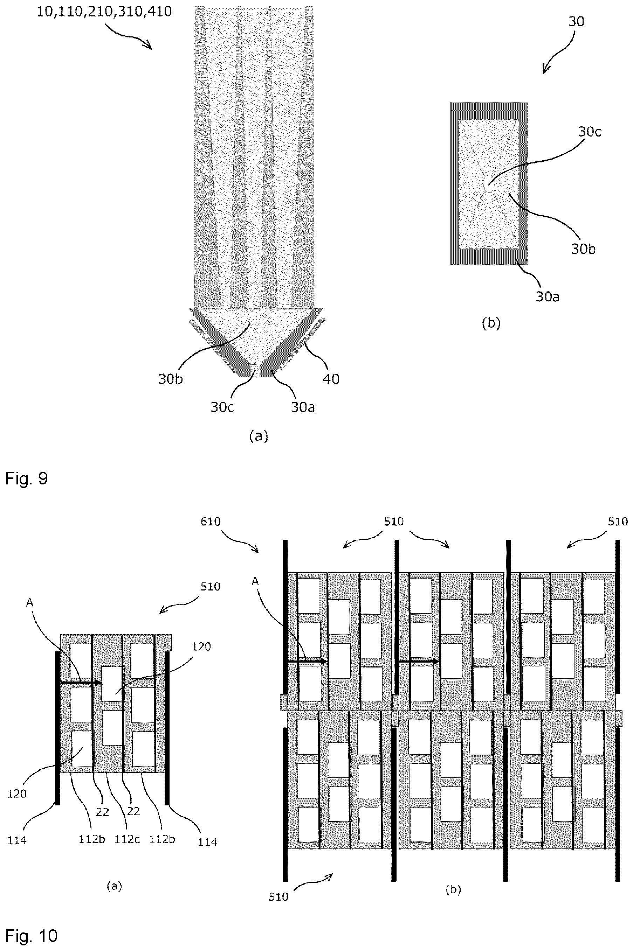

Next, as a modified example of the first embodiment of the melter device for the injection molding apparatus in the present invention shown in Figures 1 to 4 and the like that has been described, a melter device 110 in a second embodiment and a melter device 210 in a third embodiment are described with reference to Figures 5, 6, and 10. Note that Figure 5 is an exploded perspective view showing each configuration member of the melter device 110 for the injection molding apparatus. Figure 6 shows the melter device 210 for the injection molding apparatus, and (a), (c), and (d) of Figure 6 are from viewpoints substantially identical to those of (a), (c), and (d) of Figure 1, respectively, (a) is a side view of a three-port melter portion of the melter device 210, (c) is a front view of the melter device 210, and (d) is a top view of the melter device 210. In Figure 10, (a) is a top view of a melter device 510 as a modified example of the melter devices 110 and 210 shown in Figures 5 and 6, and (b) is a top view of a melter device 610 as a melter device example 4 where the melter device 510 is further combined.

First, as shown in Figure 5, sequentially from a side (the left in Figure 5) in the small-width direction, the melter device 110 for the injection molding apparatus is configured by stacking and combining: a three-port melter portion 112a that opens on the right; a heater-accommodating portion 114 made up of a receiver portion 114(1) opening on the right and a plate-shaped lid member 114(2) that closes this portion; and two three-port melter portions 112b that open on the left. Similar to the main body portion 12b of the three-port melter portion in Figure 3(a) and the like, the main body portions 112a and 112b of the three-port melter portion have a structure where the horizontal section has an area not increasing from top toward bottom, and melt ports 120 are formed by a groove portion that is a quadrangular open conduit opening on the left, and three melt ports 120 (groove portions) are provided in a row along the large-width direction by including inner frames 118b on both the sides of the main body portions 112a and 112c in the large-width direction, and outer frames 118a serving as partitions between the melt ports 120 (groove portions).

The main body portion 112a of the leftmost three-port melter portion has the melt ports 120 that open on the right side, and the receiver portion 114(1) included in the melter device heater portion 114 is stacked and arranged from the right side, and a side wall 114(1)c of the receiver portion 114(1) closes the melt ports 120. Accordingly, the melter portion 112a that internally includes the three melt ports 120 is configured by the main body portion 112a of the three-port melter portion, and the receiver portion 114(1).

Next, similar to the melter device heater portion 14 in Figure 4, the melter device heater portion 114 includes: the aforementioned receiver portion 114(1) that opens on the right side and is made up of a frame portion 114(1)b surrounding three edge portions of the plate-shaped member and a heater-mounted surface 114(1)a lower than this portion; and the plate-shaped lid member 114(2) that closes the portion 114(1). Similar to the aforementioned melter device heater portion 14 in Figure 4, an ultrathin heater layer formed of an insulating layer, a plated layer, and a heating wire (not shown) is provided on the surface of the heater-mounted surface 114(1)a of the receiver portion 114(1), and heat from the heater layer is transferred across the full extent of the receiver portion 114(1) and the lid member 114(2), which are made of cemented carbide having a high heat conductivity, thus functioning as a plate-shaped heater.

The main body portion 112b of the three-port melter portion is stacked and arranged on the heater-accommodating portion 114 from the right. The main body portion 112b of the three-port melter portion has the same structure as that of the main body portion 112a of the three-port melter portion described above with the opening side being reversed left to right, and the three melt ports 120 that open on the left are closed with the lid member 114(2) of the melter device heater portion 114, thus constituting the melter portion 112b that internally has the three melt ports 120. Consequently, the melter device heater portion 114 is interposed between the three-port melter portions 112a and 112b on both the left and right sides and serves as a lid member for both the portions, and transfers heat in proximity to both the melter portions 112a and 112b, which achieves a high thermal efficiency, and further achieves reduction in the number of components and reduction in size.

In the example in Figure 5, on the right side of the main body portion 112b of the three-port melter portion attached to the right of the melter device heater portion 114, the main body portion 112b of the same three-port melter portion is stacked and arranged. In this case, the side wall of the main body portion 112b of the three-port melter portion also serves as the lid member of the main body portion 112b of the three-port melter portion on the right side, which can also achieve reduction in the number of components and the size, and can also reduce the distance from melter device heater-accommodating portion 114, thereby making the thermal conduction efficiency favorable.

Figure 6 shows a melter device 210 where a melter device heater portion 114 and a three-port melter portion 112b are further assembled to the melter device 110 in Figure 5 as the third melter device embodiment. Note that (a), (c), and (d) of Figure 6 are from viewpoints substantially identical to those of (a), (c), and (d) of Figure 1, respectively, and (a) is a side view of the main body portion 112a, 112b of the three-port melter portion of the melter device 210, (c) is a front view of the melter device 210, and (d) is a top view of the melter device 210 (from the view rotated clockwise by 90° from the top view of Figure 1 (d)).

As shown in the front view of Figure 6(c), in the melter device 210, the receiver portion 114(1) of the melter device heater portion 114 in Figure 5 with the opening side being reversed left to right is stacked and arranged on the right of the side wall of the main body portion 112b of the rightmost three-port melter portion of the melter device 110 shown in Figure 5. Furthermore, the main body portion 112b of the three-port melter portion is stacked and arranged from the right, on the right side wall (outer wall) of the receiver portion 114(1). In the melter device 210, two units that each include the melter device heater portion 114 interposed between the three-port melter portions 112a or 112b on the left and right side are arranged in an overlaid manner, all the melt ports 120 of the four three-port melter portions 112a or 112b are at an equal distance from the heater-accommodating portions 114, which can reduce the number of components and the size as in Figure 5, and further improve the thermal efficiency and rapidly and uniformly melt a large amount of resin pellets.

In the example in Figure 10, as shown in (a), a structure where three melter portions 112b, 112c, and 112c are interposed between two melter device heater portions 114 is adopted. Specifically, the main body portion 112b of the three-port melter portion is attached along with the lid member 22 to the melter device heater portion 114 on the right side, and the main body portion 112c of a two-port melter portion is pasted along with the lid member 22 to the lid member 22 on the right side. The main body portion 112b of the three-port melter portion is pasted along with the lid member 22 on the further right side, and the melter device heater portion 114 having been described above is attached on the still right side. Similar to the melt ports 120 in Figures 5 and 6, the melt ports 120 in the melter portions 112b, 112c, and 112c each have a substantially rectangular opening, and are arranged along the vertical direction (large-width direction), and between the adjacent melter portions 112b, 112c, and 112c, their melt ports 120 are arranged to deviate in the large-width direction and the vertical direction. By such arrangement of the melt port rows of the adjacent melter portions 112b, 112c, and 112 that deviate from each other, entering heat from the heater-accommodating portion does not pass through the air layer and the resin material in the melt ports 120 as indicated by an arrow A, and is transferred through the melter portion material having a high thermal conductivity, such as of cemented carbide described later. Accordingly, even with the arrangement as in Figure 10 of not being directly adjacent to the melter device heater portions 114, sufficient heat can be transferred even to the melt ports 120 in the center melter portion 112c.

With the structure where the melt ports 120 are arranged to deviate from each other and the entire melter portion is interposed between the melter device heater portions 114 as described above, the melter device 510 that constitutes the unit as shown in Figure 10(b) allows multiple units to be combined and form the melter device 610 that is a larger unit. Thus, even when the size of the unit is increased, the thermal conductivity does not decrease, and the low-power and large-capacity melter device for the injection molding apparatus can be manufactured.

In Figure 11, a photographic diagram of a melter device 710 that is a modified example of the melter device 10, 110, 210, and 510 that have been described above is shown as a fourth melter device embodiment. Specifically, (a) is a schematic top photographic diagram of a melter device 710 (from a viewpoint substantially identical to that of Figure 1(d)), (b) is a schematic bottom photographic diagram showing the opposite side of (a), and (c) is a perspective photographic diagram allowing a melter device heater portion 514 on the side of the melter device 710 to be viewed. The melter device 710 is made of cemented carbide described later, and it is shown that sequentially from the side in the small-width direction, a seven-port melter portion 712a, a six-port melter portion 712b, and a seven-port melter portion 712c are arranged in parallel. As described above, in comparison between Figure 11(a) and Figure 11(b), it is shown that the horizontal sectional area of the inlet opening (inlet) 720a of each melt port 720 on the top surface decreases toward the outlet opening (outlet) 720a on the bottom.

### <<Raw Material Example of Melter Devices Described in First to Fourth Embodiments for Injection Molding Apparatus in Present Invention>>

The melter portions 12, 112, 212, and 712, and the melter device heater portions 14, 114, and the 714 of the melter device 10, 110, 210, 510, and 710 having been described above are manufactured from cemented carbide. Specifically, the uniform mixture of powders of tungsten carbide (WC) and cobalt (Co) is pressurized by a press or the like and formed in a rough shape, temporarily sintered, subjected to a debinding treatment, and temporarily sintered. Subsequently, the melt ports 20, 21, 120, and 712, and positioning pin holes (not shown) are formed in the relatively easy-to-process temporarily sintered compact by a cutting process and a boring process (machining processes), and final sintering is performed at about 1,300°C. Subsequently, the melt ports 20, 21, 120, and 720 and matching surfaces of the finally sintered object are subjected to machining processes by grinding and polishing processes, and subsequently, the matching surfaces are heated to make interpenetration of cemented carbide, and are diffusion-bonded, thus forming a final product.

In the case of the melter portions 12, 112, 212, and 712 and the melter device heater portions 14, 114, and 714 manufactured from cemented carbide as described above, the wear resistance is high because the hardness is high, it is excellent to eject resin material, such as high-strength fibers, and the thermal conductivity is also high. Accordingly, the inside of the melt ports 20, 21, 120, and 720 can be sufficiently heated, and rapid and uniform heating control can be performed even without increasing, over a required level, the temperature due to entering heat from the aforementioned heater layer formed of the heating wires and the plated layers in the melter device heater portions 14, 114, and 714. Since cemented carbide is manufactured by forming the powder mixture by the press or the like and sintering it, processing is easy and the mass productivity is high in the cases of the melter portions 12, 112, 212, and 712, and the melter device heater portions 14, 114, and 714 that each have an open structure such as of the main body portion and the lid portion, even with the high hardness.

### <<Other Melter Device Examples 1 and 2 for Injection Molding Apparatus>>

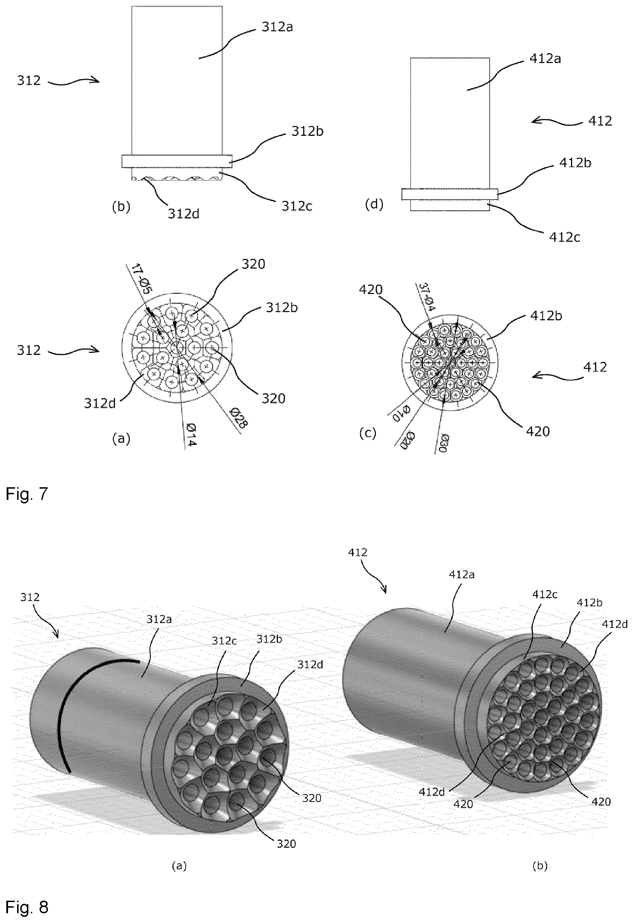

Next, melter portions 312 and 412 of melter devices 310 and 410 are described as other melter devices for injection molding apparatuses, with reference to Figures 7 and 8. Figure 7(a) is a front view of the melter portion 312, Figure 7(b) is a top view of the melter portion 312, Figure 7(c) is a front view of the melter portion 412, and Figure 7(d) is a top view of the melter portion 412. Figure 8(a) is a perspective view of the melter portion 312 viewed from the top surface, and Figure 8(b) is a perspective view of the melter portion 412 viewed from the top surface.

The melter portions 312 and 412 of these melter devices 310 and 410 each have an integral, vertical, substantially cylindrical shape that extends in the vertical direction, cylindrically extend from top in Figures 7 and 8, i.e., from the main body portions 312a and 412a, to distal end portions 312c and 412c at the lower end, and include flange portions 312b and 412b that have a diameter annularly increasing between both at the lower part, and protrude outward in the radial direction to secure a space that allows a heater (heater-accommodating portion) to be attached on the outer peripheral wall or protects the heater. The melter portions 312 and 412 include pluralities of frustum-shaped melt ports 320 and 420 that completely penetrate from the upper end to the lower end and gradually taper. Note that while in actuality, the vertical direction in the side view of the melter portions 312 and 412 shown in Figures 7(b) and 8(d) is upside down, and Figures 7(a) and 8(c) are top views of the melter portions 312 and 412, the description is made below with the vertical positioning on the diagrams.

As for the melt ports 320 and 420, single ports are provided on the respective axial centers, pluralities of ports are provided concentrically at equal distances from the corresponding axial center in the radial direction. The melt ports 420 more than melt ports 320 are provided. Specifically, as also shown in Figures 7(a) and 7(c), as for the melt ports 320, one melt port is provided on the axial center, and 5 and 11 melt ports are provided at regular intervals along two concentric circles apart in the radial direction by an equal distance radially outside the melt port on the axial center, and as for the melt ports 420, one melt port is provided on the axial center, and 5, 12, and 18 melt ports are provided at regular intervals along three concentric circles apart in the radial direction by an equal distance radially outside the melt port on the axial center. The lower surfaces of the distal end portions 312c and 412c are not flat surfaces, and guide portions 312d and 412d that respectively surround the peripheries of the melt ports 320 and 420 and serve as gradual guides to the melt ports 320 and 420 are provided. When resin pellets (resin material) are put into the melt ports 320 and 420 through the guide portions 312d and 412d, the pellets uniformly enter the melt ports 320 and 420 and are transferred at substantially identical pressures.

The melter portions 312 and 412 have external shapes formed of cemented carbide, and the melt ports 320 and 420 are pierced therein. Specifically, similar to the aforementioned melter devices 10, 110, and 210 for the injection molding apparatuses in the first present invention, the uniform mixture of powders of tungsten carbide (WC) and cobalt (Co) is pressurized by a press or the like and formed in a cylindrical rough shape that includes a flange portion, temporarily sintered, subjected to a debinding treatment, and temporarily sintered. Subsequently, the melt ports 320 and 420 and guide portions 312d and 412d are formed in the relatively easy-to-process temporarily sintered compact by a boring process and a cutting process (machining processes), and final sintering is performed at about 1,300°C. Subsequently, the finally sintered object is subjected to a polishing process, and a final product made of cemented carbide is formed.

Note that since cemented carbide has a low toughness, it is required to prevent cracking due to excessive reduction in distance between the melt ports. Consequently, an appropriate aperture ratio is preliminarily calculated depending on the resin material and the required amount of ejection, and it is controlled to provide the port diameter and the number of ports that can secure the required aperture ratio.

In the case of the melter portions 312 and 412, it is known that the aperture ratios of the melt ports 320 (15 ports) and 420 (37 ports) in the distal end portions 312c and 412c that serve as their inlet openings are about 28% and about 54%, respectively. Consequently, the melter portion 412 having the larger number of ports has a higher aperture ratio than the melter portion 312 having the smaller number of ports does, and in view of increasing the amount of ejection, it is shown that the melter portion 412 is more preferable. On the other hand, in consideration of the fact that cemented carbide is material with a low toughness, the melter portion 412 having the larger number of ports has high difficulty with the piercing process or cannot be processed. Cemented carbide is formed from mixed powder of tungsten carbide (WC) and cobalt (Co). It is known that as the mixing ratio of tungsten carbide (WC) is higher and the mixing ratio of cobalt (Co) is lower, the thermal conductivity tends to be higher, and that the mixing ratio and particle diameter of cobalt (Co) also affect flexural strength (MPa). Consequently, the optimal design is preliminarily made or the optimal melter portions are preliminarily selected to secure the maximum machinable aperture ratio depending on the composition of the molten resin material and cemented carbide and the required amount of ejection.

### <<Peripheral Device (Melt Cone Portion and Nozzle Portion) of Melter Device for Injection Molding Apparatus in Present Invention>>

In Figure 9, a melt cone portion 30 provided below the substantially rectangular box-shaped melter devices 10, 110, 210, 510, 610, and 710 shown in Figures 1 to 6 and 10, and melt cone heater portions 40 arranged over the periphery of the melt cone portion 30 are provided, and (a) is a substantially front longitudinal sectional view schematically showing them, and (b) is a substantially top view of the melt cone portion 30.

The melt cone portion 30 receives (merges) the molten resin material released from the melt ports 20, 21, 120, and 720 of the melter devices 10, 110, 210, 510, 610, and 710 and guides it to a nozzle portion (described later) for ejection to the outside, and includes: an outer peripheral wall 30a attached at the lower part of each of the melter device 10, 110, 210, 510, 610, and 710 by a coupling jig, such as a nut (for a detailed example, see reference numeral 50 described later); and an inner through-hole 30b that receives (merges) the resin material released from each of the melt ports 20, 21, 120, and 720 from the inlet 30d at the upper part, guides it downward, and releases it through an outlet 30c positioned at the lower center or the like to the outside (nozzle portions 60 described later).

The specific structures of the melt cone portion 30, and the nozzle portion 60 for ejecting, to the outside, the molten resin material released from the melt cone portion 30 are exemplified and described below.

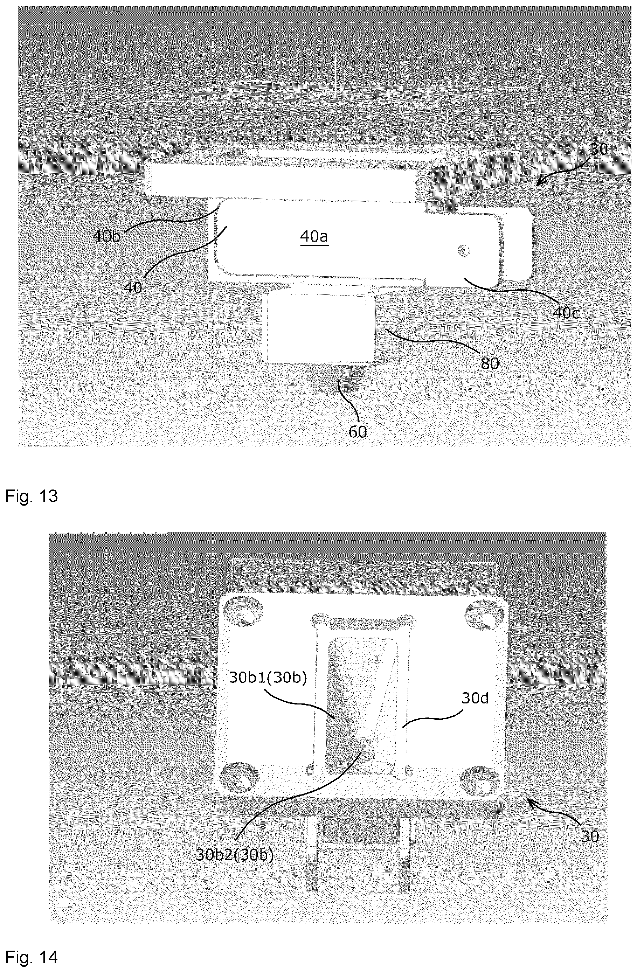

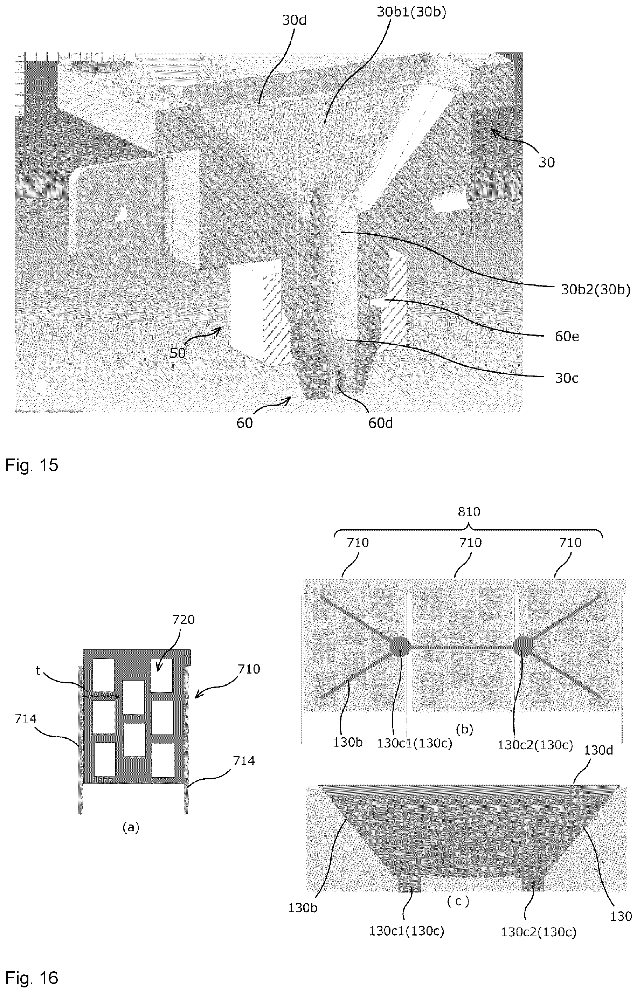

Figure 12 is a schematic longitudinal sectional view showing a situation where the melt cone portion 30 and the nozzle portion 60, 160 are coupled below the melter portion 712 in Figure 11 by a coupling jig 50, 150, (a) shows a coupling example 1, and (b) shows a coupling example 2 that is an improvement of (a). Figure 13 is a perspective view showing a state where the melt cone portion 30 and the corresponding nozzle portion 60, 160 in Figure 12 are coupled, Figure 14 is a perspective view of the melt cone portion 30 viewed from obliquely upper right in Figure 13, and Figure 15 is a longitudinal sectional view of Figure 13.

In both a coupling example 1 (see Figures 12(a) and 13 to 15), and a coupling example 2 (see Figures 12(b) and 13 to 14), the melt cone portion 30 receives (merges) the molten resin material released from the aforementioned melt ports 20, 21, 120, 720 from the inlet 30d at the upper part into inner through-hole 30b, and guides it downward. An upper part of the inner through-hole 30b has an inverted pyramid inner hole 30b1 with a bore having a substantially quadrangular pyramid shape (including an inverted roof shape), and has a horizontal sectional area that decreases and tapers downward, and the lower end of the inverted pyramid inner hole 30b1 is joined to a cylindrical bore 30b2 having a cylindrical shape, with the same inner diameter, allowing the molten resin material to be released downward.

As shown in Figure 13, the melt cone heater portions 40 are arranged on outer walls on the opposite sides of the melt cone portion 30. Similar to the melter device heater portions 14, 114, and 714 described above, each melt cone heater portion 40 is made of cemented carbide, and includes a frame portion 40b, and a heater-mounted surface 40a positioned lower than the frame portion 40b, and on the heater-mounted surface 40a there are formed an insulating layer made by thermal spraying ceramic such as alumina (aluminum oxide), and a heater layer which has a surface subjected to nickel-based alloy plating and to which a heating wire (not shown) is attached. Furthermore, a heat-resistant insulating film is painted on the nickel-based alloy plating layer. Note that the points that a plate-shaped piece 40c protrudes outward from a portion without the frame portion 40b, and the plate-shaped piece 40c extends outward and connects power from a power source to the heating wire (not shown) on the heater layer are also similar to those of the melter device heater portions 14, 114, and 714 described above.

The molten resin material released from the melt cone portion 30 is received into the nozzle portion 60, 160. The nozzle portion 60 in the coupled example 1 (Figures 12(a) and 13 to 15), and the nozzle portion 160 in the coupled example 2 (Figures 12(b) and 13 and 14) include an inner flow path that has a horizontal sectional area decreasing from an inlet 60e, 160e at the upper part toward an ejection port 60d, 160d at a lower part. The lower end of the melt cone portion 30 is inserted into the upper part of the inner flow path, and a spot facing portion 60a, 160a serving as a stopper against intrusion downward is formed. The lower end of the melt cone portion 30, and the upper end of the nozzle portion 60, 160 are fastened to each other by a nut (coupling jig) 50, 150 from the outer peripheries of both the portions.

Next, in the coupled example 1 (Figures 12(a), 13 to 15), an upper part 60b of the nozzle portion 60 has the same cylindrical shape having the same outer diameter up to the proximity to the height of the spot facing portion 60a, and the outer peripheral wall of the lower part 60c and the inner peripheral wall of the lower end portion 50b of the nut 50 narrow down in a tapered manner. On the other hand, the upper part 160b of the nozzle portion 160 in the coupled example 2 (Figures 12(b), 13 and 14) has a cylindrical shape having the same outer diameter up to the proximity to the height of the spot facing portion 160a, but has a shorter height dimension (Z1 < Z2 in Figure 12) than the coupled example 1 does, the outer peripheral wall of the lower part 160c has an outer diameter decreasing stepwise with respect to the upper part 160b, and the inner peripheral wall of the lower end portion 150b of the nut 150 has a diameter that decreases accordingly. Consequently, the coupled example 2 has a structure where since the fastening force of the nut 150 is substantially uniformly applied in the vertical direction to the entire range of the fastening portion of the nut 150, and the fastening force is not applied in the radial direction, the tolerance is not too strict.

In the coupled example 2 (Figures 12(b) and 13 to 14), a first washer 70a and a second washer 70b that are made of high thermal conductivity metal are respectively inserted and arranged into a gap Z3 between the spot facing portion 160a of the inner flow path of the nozzle portion 160 and the lower end of the melt cone portion 30, and a gap Z4 between the diameter reducing portion of the lower end portion 150b of the nut 150 and the lower part 160c having a diameter decreasing stepwise on the outer periphery of the nozzle portion 160, thus preventing the molten resin material from leaking. Note that the materials of the first washer 70a and the second washer 70b are typically inexpensive tough pitch copper or pure copper, characterized in that the thermal conduction is high, and the boundaries are well fit due to its soft property and heat is not retained.

Note that both the nuts 50 and 150 have outer walls in which groove shapes are formed to increase the outer surface areas, thus respectively forming heat transfer fins 50a and 150b that increase the cooling and heating effect. Chromium copper having high strength among types of Cu with high thermal conductivity, or cemented carbide that has lower thermal conduction than chromium copper does but has high wear resistance is selected as the materials of the nuts 50 and 150. Furthermore, since the molten resin material has requirements for low wear resistance and thermal conductivity, inexpensive high-speed steel, besides cemented carbide, is sometimes selected for the melt cone portion 30.

As for the melt cone portion 30 having been described with reference to Figures 12 to 15, the examples where the single melt cone portion 30 is coupled to each single melter device 710 have been described above. As shown in Figures 16 to 18, when a melter device 810 including the multiple (three) melter devices 710 arranged in parallel is formed, the melt cone portion 30 is coupled over the adjacent melter devices 710, the molten resin material from the melt ports 720 of the three melter devices 710 is collectively received (merged) in some cases.

Figure 16(a) is a schematic top view of the single melter device 710 shown in Figure 11. Figure 16(b) is a schematic top view showing a situation of arranging the melt cone portion 130 over the three melter devices 710 in the state where the three melter devices 710 in (a) are arranged in parallel, shows the melter devices 710 in a perspective manner, and schematically shows the melt cone portion 130 with its inner through-hole 130b and outlets 130c with thick lines. Furthermore, Figure 16(c) is a schematic side view for facilitating understanding of the position and size of the melt cone portion 130 shown in the schematic top view in (b).

In the melt cone portion 130, the molten resin released from the melt ports 720 of the adjacent three melter devices 710 is merged into an inlet 130d above the inner through-hole 130b of the single melt cone portion 130, and is guided downward through the inner through-hole 130b. The inner through-hole 130b has a horizontal area that reduces to form an inverted pyramid shape, has a vertically closed inverted roof shape at the bottom, and is provided with the two outlets 130c (a first outlet 130c1 and a second outlet 130c2) at the opposite ends of the ridge of the roof. The molten resin material is released from the first outlet 130c1 and the second outlet 130c2 to a nozzle portion (not shown). In the case of adopting such a melt cone portion 130, some melt cone portions 130 are prepared, the melter devices 710 are coupled thereto depending on the desired amount of ejection, and the melt cone portion 130 that can cover them is arranged thereover, which can easily manufacture injection-molded objects while customizing a large amount of resin to a desired amount of ejection.

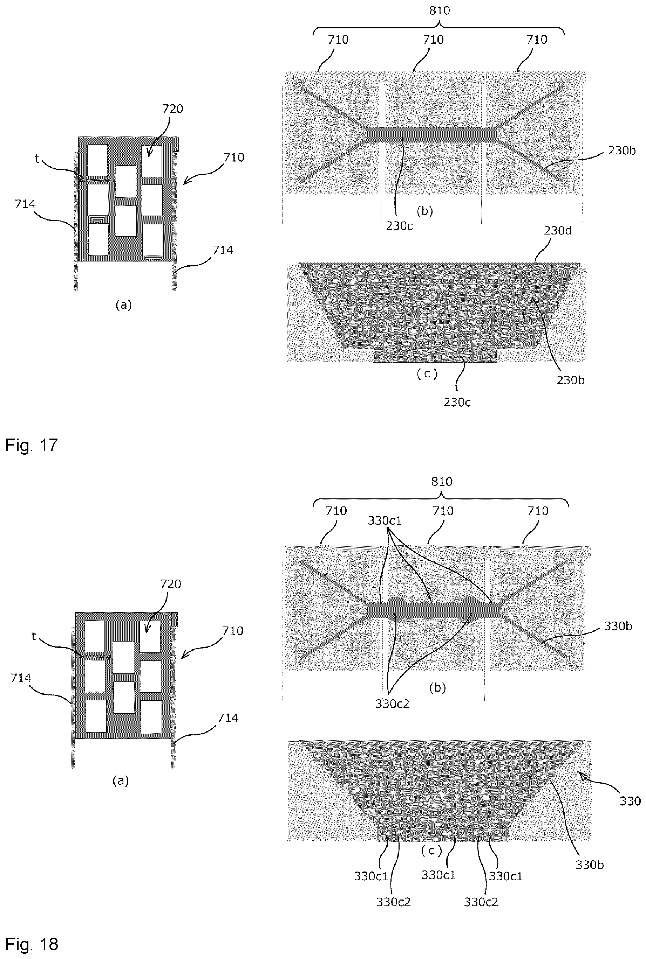

As other examples where the melt cone portion is coupled over the adjacent melter devices 710, a melt cone portion 230 having an outlet formed in a slit shape and its modified example that is a melt cone portion 330 are also provided. Figures 17 and 18 show the respective melt cone portions 230 and 330 with the same viewpoint and method as those in Figure 16. Specifically, Figures 17(a) and 18(a) are schematic top views of the single melter device 710, Figures 17(b) and 18(b) are schematic top views showing a situation where the melt cone portion 230, 330 is arranged over the three melter devices 710, and Figures 17(c) and 18(c) are schematic side views for facilitating understanding of the position and size of the melt cone portion 130.

First, similar to the case in Figure 16, as shown in Figures 17(b) and 17(c), in the melt cone portion 230, the single melt cone portion 230 is coupled over the three melter devices 710, while the inlet 230c of the inner through-hole 230b of the melt cone portion 230 extends to have a slit shape having a substantially identical width over the entire inverted roof at the bottom of the inner through-hole 230b.

With such a shape that is the slit shape of the outlet 230c, when the molten resin material is ejected, a weld line is less likely to occur on the molded object and the strength becomes high because the ejected resin material is temporarily released without being separated.

On the other hand, likewise, the melt cone portion 330 has the outlet 330c that forms the slit shape, while as shown in (b) and (c) of Figure 18, the slit width of the outlet 330c changes along the way in the longitudinal direction. Specifically, it is shown that the outlet 330c is formed by including a first outlet 330c1 having a narrow slit width that is a substantially identical width, and second outlets 330c2 having a thicker slit width than the first outlet 330c does. Although not shown, the slit width of the outlet 330c is continuously changed in some cases.

In the case where the slit width is changed as described above, even with a uniform molten resin material rate, a portion with an enlarged slit width is arranged for the portion of the molded object intended to have an increased thickness, and a portion with a small slit width is arranged for another portion, which can uniformly manufacture an molded object having a small thickness of this molded object without causing any weld line.

While the various embodiments of the present invention have been described above, the embodiments described in the present Description and shown in the drawings are only examples of the present invention. The presence of other various improved examples and modified examples derived from the technical thought and teachings in the claims will be apparent to those skilled in the art.

### Reference Signs List

10, 110, 210, 310, 410, 510, 610, 710, 810 Melter device
12, 112, 212, 312, 412, 712 Melter portion
14, 114, 714 Melter device heater portion
14a, 714a Heater-mounted surface
16 Heating wire (heater)
18, 19, 118 Frame portion
20, 21, 120, 320, 420, 720 Melt port
30, 130, 230, 330 Melt cone portion
30b, 130b, 230b, 330b Inner through-hole
30c, 130c, 230c, 330c, Outlet
130c1 First outlet
130c2 Second outlet
330c1 Small-width portion
330c2 Large-width portion
30d, 130d, 230d, 330d Inlet
40 Melt cone heater portion
50, 150 Coupling jig (nut)
50a, 150a Fin
60, 160 Nozzle portion
70 Washer
80 Heating means
Z3, Z4 Gap

## Claims

1. A melter device for a plunger-type injection molding apparatus that has a vertical structure and includes no resin extrusion screw, the melter device melting resin material, wherein
the melter device includes:
a melter portion that forms a rectangular box-shaped housing structure, and internally has a plurality of melt ports that completely penetrate upward and downward and have areas of penetrating portions that do not increase from top toward bottom; and
a melter device heater portion that is provided on one of large-width outer walls of the melter portion so as to supply heat to an extent to at least a lower part on the one of outer walls, and accommodates a heating instrument.

2. The melter device for the injection molding apparatus according to claim 1, wherein the melter portion is formed of cemented carbide.

3. The melter device for the injection molding apparatus according to claim 1, wherein the melter device heater portion is further provided on each of both the large-width outer walls of the melter portion to allow the melter portion to be interposed therebetween in a small-width direction.

4. The melter device for the injection molding apparatus according to claim 3, wherein the melter device includes a plurality of the melter portions, and the melter device heater portions interposed between the corresponding melter portions in the small-width direction such that these portions are arranged in parallel with the outer walls facing each other in the small-width direction.

5. The melter device for the injection molding apparatus according to any one of claims 1 to 4, wherein the plurality of melt ports included in the melter portion
each include a substantially identical, substantially quadrangular section in a horizontal direction, are each arranged along the large-width direction and form a row, and are each inclined so as to have a horizontal sectional area at a lower part that is less than or equal to a horizontal sectional area at an upper part.

6. The melter device for the injection molding apparatus according to claim 3, wherein the plurality of melt ports included in the melter portion
each include a substantially identical, substantially quadrangular section in a horizontal direction, and are each arranged along the large-width direction and form a row, and
the melt ports of the melter portions that are adjacent to each other are arranged so as to deviate in a large-width direction from each other.

7. The melter device for the injection molding apparatus according to any one of claims 1 to 6, wherein the melter portion includes: a main body portion that includes a plurality of groove portions that open on one side surface side, extend upward and downward, and are closed on an opposite side surface side serving as an outer wall; and a lid member that is attached to and faces the side surface of the main body portion on one direction side, and blocks the groove portions of the main body portion such that the groove portions of the main body portion and the lid member form the melt ports in a blocked state.

8. The melter device for the injection molding apparatus according to claim 7, wherein the lid member of the melter portion is freely selected as the closed outer wall of the main body portion of another melter portion, or an outer wall of the melter device heater portion.

9. An injection-molded object made of the resin material molded by the melter device for the injection molding apparatus according to any one of claims 1 to 8.

10. The injection-molded object according to claim 9, wherein the resin material is long-fiber thermoplastic resin.

11. An injection molding apparatus comprising a melt cone portion that receives the resin material released from the melt ports at a lower part of the melter portion of the melter device for the injection molding apparatus according to any one of claims 1 to 8, and releases the resin material downward, wherein
the melt cone portion
has an inner through-hole including: an inlet at an upper part that receives the resin material released from the melt ports, and has a substantially quadrangular bore; and an entire or a partial range that is from the inlet to an outlet at a lower part and has a substantially quadrangular pyramid shape with an apex indicating downward or an inverted roof shape.

12. The injection molding apparatus according to claim 11, including the melter device according to claim 4 for the injection molding apparatus, wherein
in the melt cone portion
over a plurality of melter portions adjacent each other among the melter portions arranged in parallel, molten resin released from the melt ports of the plurality of melter portions is merged into the inlet at the upper part of the inner through-hole and releases the molten resin from the lower part of the inner through-hole.

13. The injection molding apparatus according to claim 12, wherein the inner through-hole of the melt cone portion is formed in a slit shape with the outlet at the lower part extending in the small-width direction of the melter portions.

14. The injection molding apparatus according to claim 13, wherein in the inner through-hole of the melt cone portion with the outlet at the lower part being formed in the slit shape, the outlet with the slit shape has a width changing at a middle of the outlet in a longitudinal direction.

15. The injection molding apparatus according to any one of claims 11 to 14, further comprising melt cone heater portions that each accommodate the heating instrument on outer walls of the melt cone portion on both sides so as to supply heat to the inner through-hole.

16. The injection molding apparatus according to any one of claims 11 to 15, further comprising a nozzle portion at a lower end of the melt cone portion, the nozzle portion receiving molten resin material from the outlet of the melt cone portion and ejecting the molten resin material at a lower part, wherein
the nozzle portion
includes an inner flow path that has a horizontal sectional area reducing from the inlet at the upper part toward an ejection port at the lower part, and a spot facing portion which is formed at the upper part of the inner flow path, into which the lower end of the melt cone portion is inserted, and which serves as a stopper against intrusion to the lower part, and
the lower end of the melt cone portion and an upper end of the nozzle portion are coupled to each other from outer peripheries of both by a coupling jig.

17. The injection molding apparatus according to claim 16, wherein an outer peripheral wall of the nozzle portion has a diameter reducing stepwise in a vertical direction.

18. The injection molding apparatus according to claim 16 or 17, wherein washers made of a high thermal conductivity metal are inserted into and arranged in a gap between the spot facing portion of the inner flow path of the nozzle portion and the lower end of the melt cone portion, and a gap between a diameter reducing portion at the lower end of the coupling jig and a stepwise portion of the outer periphery of the nozzle portion.

19. The injection molding apparatus according to any one of claims 16 to 18, wherein a heat transfer fin is arranged on an outer wall of the coupling jig.

20. An injection molding apparatus, wherein on a surface that is made of cemented carbide and accommodates the heating instrument in the melter device heater portion according to claim 1 and/or the melt cone heater portion according to claim 15,
there are formed an insulating layer made of ceramic generated by thermal spraying, and a heater layer formed by nickel-based alloy plating on a surface of the insulating layer.
